# EUROPÄISCHE PATENTSCHRIFT

(11) **EP 2 689 157 B1**
(45) Veröffentlichungstag und Bekanntmachung des Hinweises auf die Patenterteilung: **26.11.2014**
(21) Anmeldenummer: 11754622.6
(22) Anmeldetag: 08.09.2011
(51) Int. Cl.: F16D 3/74, F16D 7/06

(54) **SICHERHEITSKUPPLUNG FÜR EIN KRAFTFAHRZEUG**
SAFETY COUPLING FOR A MOTOR VEHICLE
ACCOUPLEMENT DE SÉCURITÉ POUR UN VÉHICULE AUTOMOBILE

(30) Priorität: 25.03.2011 DE 102011015024
(43) Veröffentlichungstag der Anmeldung: 29.01.2014
(73) Patentinhaber: Audi AG, 85045 Ingolstadt (DE)
(72) Erfinder: MEITINGER, Karl-Heinz, 81667 München (DE)
(74) Vertreter: Wohnert, Dietmar
(86) Internationale Anmeldenummer: PCT/EP2011/004522
(87) Internationale Veröffentlichungsnummer: WO 2012/130265

(56) Entgegenhaltungen:
- EP-A1- 0 702 167
- CH-A- 235 094
- DE-A1- 1 953 462
- DE-A1-102005 017 819
- DE-U1-202007 001 430
- DE-U1-202007 008 591
- GB-A- 874 155

## Beschreibung

Die Erfindung betrifft eine Sicherheitskupplung für ein Kraftfahrzeug nach dem Oberbegriff des Patentanspruchs 1. Eine solche Sicherheitskupplung ist i.e. aus DE 1 953 462 A1 bekannt.

Bei Elektrofahrzeugen oder Hybridfahrzeugen, die eine elektrische Maschine als Antriebsmotor verwenden, ist die elektrische Maschine oft nicht trennbar mit den Antriebsrädern verbunden, das heißt es ist keine Kupplung zwischen der elektrischen Maschine und den Antriebsrädern vorhanden, sondern beispielsweise nur ein formschlüssiges Kraftübertragungselement, wie beispielsweise eine Gelenkwelle oder ein Getriebe. Tritt nun bei einer derart starren Antriebsverbindung in der elektrischen Maschine oder in der Leistungselektronik ein Fehler auf oder wird die Leistungselektronik zur Herstellung eines sicheren Fahrzeugzustands in einen aktiven Kurzschluss geschaltet, so können kurzzeitig sehr hohe Drehmomentspitzen auftreten, die das Motor-Nenndrehmoment deutlich übersteigen und mit hoher Frequenz schwingen können. Eine solche Drehmomentspitze kann durchaus den dreifachen Wert des Motor-Nenndrehmoments aufweisen, wodurch das Kraftfahrzeug fahrdynamisch instabil werden kann. Die Reifen der starr über den Antriebsstrang mit der elektrischen Maschine gekoppelten Antriebsräder können dabei die Straßenhaftung verlieren.

Grundsätzlich besteht die Möglichkeit, in den Antriebsstrang elastische Zwischenelemente einzubauen, um in einem Störfall die Drehmomentspitze zu verringern. Diese Elastizität im Antriebstrang stört jedoch im Normalbetrieb, da die positive Eigenschaft der elektrischen Maschine, nämlich schneller Drehmomentaufbau, nicht mehr optimal genutzt werden kann. Außerdem neigt der Antriebsstrang im Normalbetrieb aufgrund der elastischen Zwischenelemente stärker zu störenden Schwingungen.

Der Erfindung liegt die Aufgabe zugrunde, eine Sicherheitskupplung für ein Kraftfahrzeug anzugeben, die einerseits im Normalbetrieb eine möglichst gute Drehmomentübertragung zwischen der elektrischen Maschine und den Antriebsrädern ermöglicht, und andererseits bei Auftreten einer überhöhten Drehmomentspitze die Fahrstabilität günstig beeinflusst.

Die Aufgabe ist durch die Merkmale des Patentanspruchs 1 gelöst. Bevorzugte Weiterbildungen der Erfindung sind in den Unteransprüchen offenbart.

Gemäß dem kennzeichnenden Teil des Patentanspruchs 1 stellt die Sicherheitskupplung eine lösbare Formschlussverbindung zwischen der Maschinenwelle der elektrischen Maschine und der Radantriebswelle eines oder mehrerer Antriebsräder dar. Somit besteht im Normalbetrieb eine optimale Antriebskopplung mit optimaler Drehmomentübertragung zwischen der elektrischen Maschine und den Antriebsrädern. Sobald aber ein überhöhtes Drehmoment auftritt, löst eine Formschlusskupplung der Sicherheitskupplung aus, wodurch die formschlüssige Kopplung zwischen Maschinenwelle und Radantriebswelle aufgehoben wird. Dabei übernimmt dann eine elastische Kupplungseinrichtung die Drehmomentübertragung zwischen Maschinenwelle und Radantriebswelle, wodurch die auftretende Drehmomentspitze elastisch gedämpft wird, um einen Verlust der Haftung an den Antriebsrädern bzw. an den Reifen der Antriebsräder zu verhindern. Eine durch einen Störfall, beispielsweise einen Kurzschluss in der elektrischen Maschine, auftretende Momenten-Schwingung wird somit nur gedämpft auf die Radantriebswelle und somit auf das Antriebsrad übertragen.

Die Sicherheitskupplung hat außerdem den Vorteil, dass eine Drehmomentübertragung in beiden Richtungen, also sowohl im Motorbetrieb als auch im Generatorbetrieb, mit der Sicherheitsfunktion erfolgen kann.

Die elastische Kupplungseinrichtung, die als Kupplung im Störfall bei Auftreten einer entsprechend überhöhten Drehmomentspitze wirksam ist, kann aus wenigstens einem elastischen Gummielement bestehen, über das die Maschinenwelle mit der Radantriebswelle elastisch verdrehbar gekoppelt ist. Eine solche elastische Verbindung kann ein zwischen zwei Flanschen, die einerseits auf der Maschinenwelle und andererseits auf der Radantriebswelle befestigt sind, angeordneter Gummiring sein, in den abwechselnd von den Flanschen abstehende Stahlstifte eingreifen. Die elastische Kupplungseinrichtung kann aber auch als elastische Bolzenkupplung ausgebildet sein, die mehrere zwischen zwei Flanschen angeordnete elastische Verbindungsbolzen besitzt. Grundsätzlich können auch andere elastische Koppelelemente zum Einsatz kommen, soweit diese eine elastische Kopplung zweier Wellen ermöglichen. Wesentlich ist aber in jedem Fall, dass im Normalbetrieb die elastische Kupplungseinrichtung nicht wirksam ist, sondern eine formschlüssige Kopplung zwischen Maschinenwelle und Radantriebswelle besteht, die erst bei Überschreiten eines Drehmomentgrenzwerts auslöst, so dass dann die elastische Kupplungseinrichtung kurzzeitig eine gedämpfte Drehmomentübertragung zwischen der Maschinenwelle und der Radantriebswelle übernimmt. Fällt nämlich das Drehmoment wieder in den Normalbereich zurück, so kann die Formschlusskupplung wieder die Drehmomentübertragung übernehmen.

Besonders vorteilhaft ist es, dass die erfindungsgemäße Sicherheitskupplung keine Steuerelemente oder Sensoren oder sonstige aktiven Überwachungseinrichtungen benötigt, sondern dass die Sicherheitskupplung ein passives Einbauteil ist, bei dem zwischen zwei Betriebszuständen - starre und elastische Kopplung - passiv umgeschaltet wird, das heißt ohne dass hierfür elektrische Überwachungseinrichtungen und Steuereinrichtungen erforderlich sind.

Die lösbare Formschlusskupplung kann sehr einfach mittels federnder Rastelemente, zum Beispiel Rastkugeln, realisiert werden, die im Bereich der Maschinenwelle und/oder Radantriebswelle angebracht sind und in korrespondierende Lagerpfannen der jeweils gegenüberliegenden Welle eingreifen und gegen die Kraft einer Druckfeder aus den Lagerpfannen herausgedrückt werden können. Die Form der Lagerpfannen ist dabei an die Form und Größe der Rastkugeln angepasst. Außerdem ist die Tiefe der Lagerpfannen so gewählt, dass bei einem entsprechend hohen Drehmoment die Rastkugeln aus den Lagerpfannen gegen die Federkraft herausgedrückt werden können.

Die lösbare Formschlusskupplung mit federnd angeordneten Rastelemente kann so ausgebildet sein, dass die Rastkugeln entweder radial oder auch koaxial, bezogen auf die Ausrichtung der zugehörigen Welle, gegen eine Federkraft zurückgedrückt werden können. Über die Stärke der verwendeten Druckfedern, die die Rastkugeln in die zugehörigen Lagerpfannen drücken, kann der Drehmomentgrenzwert festgelegt werden, bei dem die Formschlusskupplung auslöst. Auch die Größe der Rastkugeln, deren Anzahl, deren Achsabstand und die Tiefe der Lagerpfannen können so gewählt werden, dass bei Überschreiten eines vorgegebenen Drehmomentgrenzwerts die Formschlusskupplung auslöst.

Nachfolgend sind zwei Ausführungsbeispiele der Erfindung in den Zeichnungsfiguren beschrieben.

Es zeigen:
- Fig. 1: eine Sicherheitskupplung mit radial federnden Rastkugeln, teilweise im Schnitt,
- Fig. 2: die obere Hälfte der stirnseitigen Ansicht gemäß Pfeilrichtung A von Figur 1 und
- Fig. 3: eine Ausführungsvariante einer Sicherheitskupplung mit koaxial federnd angeordneten Rastkugeln.

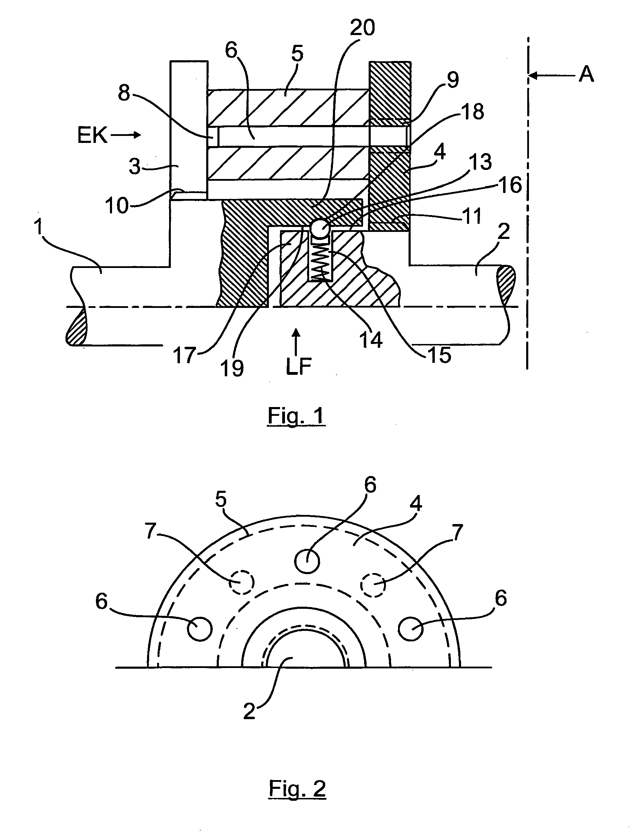

Die in Fig. 1 dargestellte Sicherheitskupplung koppelt eine Maschinenwelle 1 mit einer Radantriebswelle 2 und ist zu den Wellen 1, 2 ein im Wesentlichen rotationssymmetrisches Bauelement. In Fig. 1 ist nur der obere Bereich der Sicherheitskupplung dargestellt.

Die Sicherheitskupplung besteht aus einem die Maschinenwelle 1 umgreifenden ersten Flansch 3 und einem die Radantriebswelle 2 übergreifenden zweiten Flansch 4, zwischen denen sich ein elastisches Koppelelement in Form eines Gummirings 5 erstreckt. Von den beiden Flanschen 3, 4 ragen in gleichen Drehwinkelabständen abwechselnd Stahlstifte 6, 7 (s. auch Fig. 2) in Bohrungen 8 des Gummirings 5. Der Stahlstift 6 ist an dem Flansch 4 in ein Gewinde 9 eingeschraubt, während die in Fig. 1 nicht sichtbaren Stahlstifte 7 vom Flansch 3 entsprechend abragen und in den Gummiring 5 eingreifen.

Die Flansche 3, 4 mit dem Gummiring 5 und den Stahlstiften 6, 7 bilden eine elastische Kupplungseinrichtung, die zwischen der Maschinenwelle 1 und der Radantriebswelle 2 wirksam ist. Der Flansch 3 bzw. der Flansch 4 ist mit der Maschinenwelle 1 bzw. mit der Radantriebswelle 2 drehfest durch eine Verzahnung 10 bzw. 11 verbunden. Außerdem sind hier die Flansche 3, 4 mittels nicht dargestellter Sicherungselemente gegen eine axiale Verschiebung auf den Wellen 1, 2 gesichert.

Zur Drehmomentübertragung besitzt die Sicherheitskupplung von Fig. 1 nicht nur eine elastische Kupplungseinrichtung EK, sondern auch eine lösbare Formschlusskupplung LF. Die lösbare Formschlusskupplung LF besitzt mehrere in gleichen Drehwinkelabständen angeordnete Rastelemente 13, hier beispielhaft Rastkugeln, die sich gegen die Kraft einer Druckfeder 14 in eine Bohrung 15 zurückdrücken lassen. Die Rastkugeln 13 verteilen sich entlang der Umfangsfläche 16 einer an der Radantriebswelle 2 angeformten Schulter 17 und liegen in korrespondierenden Lagerpfannen 18 ein, die sich an der Innenfläche 19 eines an der Maschinenwelle 1 angeformten Rohransatzes 20 befinden.

Im Normalbetrieb besteht über die Rastkugeln 16 eine Formschlussverbindung zwischen der Maschinenwelle 1 einer elektrischen Maschine und der Radantriebswelle 2, die beispielsweise mit einem Antriebsrad eines Kraftfahrzeugs starr gekoppelt ist. Während des Normalbetriebs mit Formschlussverbindung zwischen Maschinenwelle 1 und Radantriebswelle 2 ist die elastische Kupplung EK wirkungslos. Sobald aber beispielsweise durch einen Kurzschluss in der elektrischen Maschine eine Störung mit einer überhöhten Drehmomentspitze an der Maschinenwelle 1 auftritt, hat dies zur Folge, dass die lösbare Formschlusskupplung LF auslöst, in dem die Rastkugeln 13 aus der jeweils zugehörigen Lagerpfanne 18 gegen die Federkraft 14 herausgedrückt werden. Dies erfolgt durch eine RelativDrehbewegung zwischen der Maschinenwelle 1 und der Radantriebswelle 2.

Sobald die lösbare Formschlussverbindung LF auslöst, das heißt die Formschlussverbindung gelöst wird, übernimmt die elastische Kupplung EK die Drehmomentübertragung über den elastischen Gummiring 5.

Das Auftreten einer impulsförmigen Störung hat eine kurzzeitige Auslösung der lösbaren Formschlusskupplung LF zur Folge, wobei eine Rückkehr zur normalen Formschlussverbindung selbsttätig unterstützt durch die Rückstellkraft der elastischen Kupplung EK erfolgt.

In Fig. 2 ist die Ansicht der Sicherheitskupplung von Fig. 1 gemäß Pfeilrichtung A in etwas verkleinertem Maßstab dargestellt, wobei insbesondere die Position der Stahlstifte 6, 7 ersichtlich ist. Der durch den Flansch 4 verdeckte Gummiring 5 ist mit unterbrochener Linie angedeutet. Der Flansch 4 ist mit der Radantriebswelle 2 drehfest durch eine Verzahnung 11 verbunden, die einen an der Radantriebswelle 2 ausgebildeten, mit unterbrochener Linie angedeuteten Zahnkranz hat.

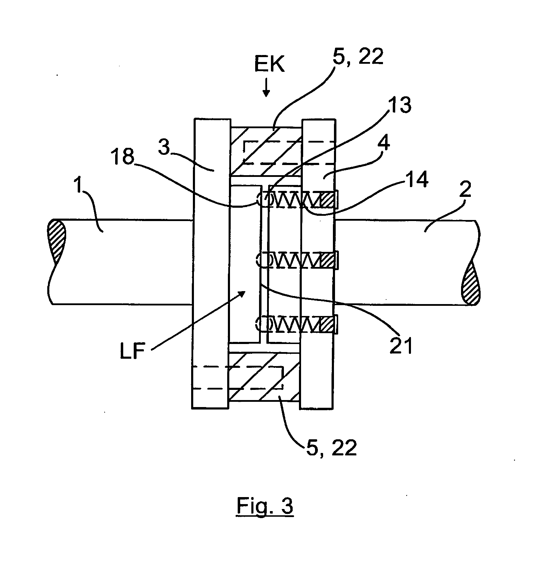

Bei dem in der Fig. 3 dargestellten Ausführungsbeispiel ist zwischen einem ersten Flansch 3 und einem zweiten Flansch 4 ebenfalls eine lösbare Formschlussverbindung LF wirksam, bei der die verwendeten Rastkugeln 13 koaxial gegen die Federkraft von Druckfedern 14 beweglich sind. Die Rastkugeln 13 werden von den Druckfedern 14 in mit unterbrochenen Linien angedeutete Lagerpfannen 18 gedrückt, die sich an einer Stirnseite 21 des Flansches 3 befinden.

Die elastische Kupplung EK ist auch hier von einem Gummiring 5 gebildet. Anstelle eines solchen Gummirings 5 könnten aber auch mehrere elastische Verbindungsbolzen 22 Verwendung finden. In der Fig. 3 besteht bei gelöster Formschlussverbindung die Gefahr, dass sich die beiden Flansche 3, 4 desaxieren. Um einer solchen Desaxierung entgegenzuwirken, kann zwischen den Flanschen 3, 4 eine nicht dargestellte starre Zentrierung vorgesehen sein, etwa Lager oder Stifte.

## Patentansprüche

1. Sicherheitskupplung für ein Kraftfahrzeug zur Übertragung eines Antriebsmoments zwischen einer Maschinenwelle (1) einer elektrischen Maschine und einer wenigstens ein Rad eines Fahrzeugs antreibenden Radantriebswelle (2), **dadurch gekennzeichnet, dass** im störungsfreien Normalbetrieb über eine lösbare Formschlusskupplung (LF) eine Drehmomentübertragung zwischen der Maschinenwelle (1) und der Radantriebswelle (2) erfolgt, und dass bei Auftreten eines einen Grenzwert übersteigenden Drehmoments die lösbare Formschlusskupplung (LF) auslöst, so dass eine elastische Kupplungseinrichtung (KE) die Drehmomentübertragung wenigstens kurzzeitig übernimmt.

2. Sicherheitskupplung nach Anspruch 1, **dadurch gekennzeichnet, dass** die elastische Kupplungseinrichtung (KE) wenigstens ein elastisches Koppelelement umfasst, über das die Maschinenwelle (1) und die Radantriebswelle (2) elastisch gegeneinander verdrehbar gekoppelt sind.

3. Sicherheitskupplung nach einem der Ansprüche 1 oder 2, **dadurch gekennzeichnet, dass** die elastische Kupplungseinrichtung (KE) zwischen einem an der Maschinenwelle (1) und einem an der Radantriebswelle (2) angeordneten Flansch (3, 4) wirksam ist.

4. Sicherheitskupplung nach einem der Ansprüche 2 oder 3, **dadurch gekennzeichnet, dass** abwechselnd an den Flanschen (3, 4) abstehende Stahlstifte (6, 7) in Bohrungen (8) des Koppelelements eingreifen.

5. Sicherheitskupplung nach einem der Ansprüche 2 bis 4, **dadurch gekennzeichnet, dass** das Koppelelement als Gummiring (5) ausgebildet ist.

6. Sicherheitskupplung nach einem der Ansprüche 1 bis 4, **dadurch gekennzeichnet, dass** die Kupplungseinrichtung (KE) den Aufbau einer elastischen Bolzenkupplung mit mehreren zwischen Maschinenwelle (1) und Radantriebswelle (2) wirksamen elastischen Verbindungsbolzen (22) hat.

7. Sicherheitskupplung nach einem der vorhergehenden Ansprüche, **dadurch gekennzeichnet, dass** die lösbare Formschlusskupplung (LF) an der Maschinenwelle (1) und/oder der Radantriebswelle (2) federnd angebrachte Rastelemente (13), etwa Rastkugeln oder Rastwalzen, hat, die in an der jeweils anderen Welle (1, 2) vorgesehene Lagerpfannen (18) mit einer Federkraft lösbar eingreifen.

8. Sicherheitskupplung nach Anspruch 7, **dadurch gekennzeichnet, dass** die Rastkugeln (13) beim Überschreiten eines Drehmomentgrenzwerts aus den Lagerpfannen (18) jeweils gegen die Federkraft einer Druckfeder (14) zurückweichen und die Formschlusskupplung (LF) auslöst.

9. Sicherheitskupplung nach einem der Ansprüche 7 oder 8, **dadurch gekennzeichnet, dass** die Rastelemente (13) gegen die Kraft von Druckfedern (14) radial federnd an einer der beiden Wellen (1, 2) abstehen und in an der Innenwand eines Rohransatzes (20) ausgebildete korrespondierende Lagerpfannen (18) der jeweils anderen Welle (1, 2) eingreifen.

10. Sicherheitskupplung nach einem der Ansprüche 7 oder 8, **dadurch gekennzeichnet, dass** die Rastelemente (13) gegen die Kraft von Druckfedern (14) koaxial federnd an einer oder beiden Wellen (1, 2) abstehen und in korrespondierende Lagerpfannen (18) der jeweils anderen Welle (1, 2) eingreifen.

## Claims

1. Safety coupling for a motor vehicle for transmitting a drive torque between an engine shaft (1) of an electric engine and a wheel drive shaft (2) which drives at least one wheel of a vehicle, **characterised in that**, during problem-free normal operation, a torque transmission between the engine shaft (1) and the wheel drive shaft (2) takes place by means of a releasable positive coupling (LF), and **in that** in the event of a torque exceeding a threshold, the releasable positive coupling (LF) disengages, so that a resilient coupling device (KE) takes over the torque transmission, at least for a short time.

2. Safety coupling according to claim 1, **characterised in that** the resilient coupling device (KE) comprises at least one resilient coupling element, by means of which the engine shaft (1) and the wheel drive shaft (2) are resiliently coupled for counter rotation.

3. Safety coupling according to either claim 1 or claim 2, **characterised in that** the resilient coupling device (KE) acts between a flange (3, 4) arranged on the engine shaft (1) and a flange arranged on the wheel drive shaft (2).

4. Safety coupling according to either claim 2 or claim 3, **characterised in that** steel pins (6, 7) alternately protruding from the flanges (3, 4) engage in holes (8) in the coupling element.

5. Safety coupling according to any of claims 2 to 4, **characterised in that** the coupling element is constructed as a rubber gasket (5).

6. Safety coupling according to any of claims 1 to 4, **characterised in that** the coupling device (KE) is constructed as a resilient bolt coupling comprising a plurality of resilient connection bolts (22) which act between the engine shaft (1) and the wheel drive shaft (2).

7. Safety coupling according to any of the preceding claims, **characterised in that** the releasable positive coupling (LF) comprises latching elements (13), for example ball detents or latching rollers, which are resiliently attached to the engine shaft (1) and/or the wheel drive shaft (2) and releasably engage with a resilient force in bearing seats (18) provided on the other shaft (1, 2).

8. Safety coupling according to claim 7, **characterised in that**, when a torque threshold is exceeded, the ball detents (13) recede in each case from the bearing seats (18) against the resilient force of a compression spring (14) and the positive coupling (LF) disengages.

9. Safety coupling according to either claim 7 or claim 8, **characterised in that** the latching elements (13) protrude radially resiliently from one of the two shafts (1, 2) against the force of compression springs (14) and engage in corresponding bearing seats (18) of the other shaft (1, 2) which are formed on the inner wall of a pipe socket (20).

10. Safety coupling according to either claim 7 or claim 8, **characterised in that** the latching elements (13) protrude coaxially resiliently from one or both shafts (1, 2) against the force of compression springs (14) and engage in corresponding bearing seats (18) of the other shaft (1, 2).

## Revendications

1. Accouplement de sécurité destiné à un véhicule automobile pour transmettre un couple moteur entre un arbre moteur (1) d'un moteur électrique et un arbre d'entraînement de roue (2) entraînant au moins une roue d'un véhicule, **caractérisé en ce que**, en service normal sans panne, il se produit, via un accouplement mécanique amovible (LF), une transmission de couple de torsion entre l'arbre moteur (1) et l'arbre d'entraînement de roue (2) et **en ce que**, lors de l'apparition d'un couple de torsion dépassant une valeur limite, l'accouplement mécanique amovible (LF) se déclenche si bien qu'un dispositif d'accouplement élastique (KE) prend en charge la transmission du couple de torsion au moins instantanément.

2. Accouplement de sécurité selon la revendication 1, **caractérisé en ce que** le dispositif d'accouplement élastique (KE) comprend au moins un élément de couplage élastique par le biais duquel l'arbre moteur (1) et l'arbre d'entraînement de roue (2) sont couplés à rotation l'un vis-à-vis de l'autre de manière élastique.

3. Accouplement de sécurité selon l'une quelconque des revendications 1 ou 2, **caractérisé en ce que** le dispositif d'accouplement élastique (KE) est efficace entre une bride (3) ménagée sur l'arbre moteur (1) et une bride (4) ménagée sur l'arbre d'entraînement de roue (2).

4. Accouplement de sécurité selon l'une quelconque des revendications 2 ou 3, **caractérisé en ce que** des broches d'acier (6, 7) distantes en alternance sur les brides (3, 4) s'engagent dans des alésages (8) de l'élément de couplage.

5. Accouplement de sécurité selon l'une quelconque des revendications 2 à 4, **caractérisé en ce que** l'élément de couplage se présente sous la forme d'une bague de caoutchouc (5).

6. Accouplement de sécurité selon l'une quelconque des revendications 1 à 4, **caractérisé en ce que** le dispositif de couplage (KE) présente la structure d'un accouplement à boulons élastiques avec plusieurs boulons de liaison élastiques (22) actifs entre l'arbre moteur (1) et l'arbre d'entraînement de roue (2).

7. Accouplement de sécurité selon l'une quelconque des revendications précédentes, **caractérisé en ce que** l'accouplement mécanique amovible (LF) présente des éléments d'encliquetage (13), par exemple des billes d'arrêt ou des cylindres d'arrêt, montés de manière élastique sur l'arbre moteur (1) et/ou sur l'arbre d'entraînement de roue (2), qui s'engagent de manière amovible sous l'effet d'une force élastique dans des crapaudines (18) présentes sur l'autre arbre respectif (1, 2).

8. Accouplement de sécurité selon la revendication 7, **caractérisé en ce que** les billes d'arrêt (13) se dégagent des crapaudines (18) lors du dépassement -d'une valeur limite du couple de rotation respectivement à l'encontre de la force élastique d'un ressort de compression (14) et l'accouplement mécanique (LF) se déclenche.

9. Accouplement de sécurité selon l'une quelconque des revendications 7 ou 8, **caractérisé en ce que** les éléments d'encliquetage (13) s'écartent radialement de manière élastique sur l'un des deux arbres (1, 2) à l'encontre de la force de ressorts de compression (14) et s'engagent dans des crapaudines correspondantes (18) de l'autre arbre respectif (1, 2) qui sont formées sur la paroi interne d'une pièce rapportée tubulaire (20).

10. Accouplement de sécurité selon l'une quelconque des revendications 7 ou 8, **caractérisé en ce que** les éléments d'encliquetage (13) sont distants coaxialement de manière élastique sur l'un ou les deux arbres (1, 2) à l'encontre de la force de ressorts de compression (14) et s'engagent dans des crapaudines correspondantes (18) de l'autre arbre respectif (1, 2).
